# EUROPÄISCHE PATENTANMELDUNG

(11) **EP 1 164 300 A1**
(43) Veröffentlichungstag der Anmeldung: **19.12.2001**
(21) Anmeldenummer: 01113152.1
(22) Anmeldetag: 30.05.2001
(51) Int. Cl.: F16C 19/16

(54) **Lager zu Lagerung einer Lenkwelle**

(30) Priorität: 06.06.2000 DE 10027513
(71) Anmelder: INA Wälzlager Schaeffler oHG, 91074 Herzogenaurach (DE)
(72) Erfinder: Loncar, Peter, 91074 Herzogenaurach (DE); Nützel, Reinhold, 91325 Adelsdorf (DE); Mühlhofer, Martin, 91058 Erlangen (DE); Erhardt, Herbert, 91074 Herzogenaurach (DE)

(57) **Zusammenfassung**

Ein Lager (1) zur Lagerung einer Lenkwelle (2) mit wenigstens einem Außenring (4) und Rollkörpern (6) ist mit einem Innenring (5) zu versehen, in dem ein das Lager (1) auf der Lenkwelle (2) abstützendes Zwischenelement radiale Abstände überbrückende sowie auf die Oberfläche der Lenkwelle wirkende und das Lager (1) auf der Lenkwelle (2) zumindest in eine Richtung axial sichernde Lappen aufweist.

## Beschreibung

### Gebiet der Erfindung

Lager zur Lagerung einer Lenkwelle mit wenigstens einem Außenring, mit einem auf der Lenkwelle angeordneten Innenring und mit zwischen dem Außenring und dem Innenring angeordneten Rollkörpern, wobei der Innenring sich zumindest mittels eines einen radialen Abstand zwischen der Lenkwelle sowie dem Lager überbrückenden Zwischenelementes auf der Lenkwelle abstützt und in mindestens eine axiale Richtung an der Lenkwelle unbeweglich gesichert ist.

### Hintergrund der Erfindung

Derartige Lager dienen zur Lagerung einer Lenkwelle in einem Fahrzeug und es gibt sie in den verschiedensten Ausführungen. So ist in DE 41 145 43 C2 ein Vierpunkt-Kugellager beschrieben, das im Wesentlichen aus zwei gegen Kugeln vorgespannten Außenringen und einem Innenring gebildet ist. Die Vorspannung der Außenringe sorgt dafür, dass die Kugeln zwischen den Außenringen und damit zwischen den Außenringen und dem Innenring spielfrei eingespannt sind. Derartige Lager gibt es allerdings auch mit Spiel zwischen den Wälzkörpern und den Laufbahnen. Der Innenring sitzt mit Hilfe eines Zwischenelementes auf einer Lenkwelle. Das Zwischenelement wird zumeist als Toleranzring bezeichnet. Der Toleranzring überbrückt einen radialen Abstand zwischen dem äußeren Durchmesser der Lenkwelle sowie dem Lager und gleicht gleichzeitig die sich im Lenkwellensitz angegebenen Summentoleranzen aus.

Oftmals, wie auch in dem vorher beschriebenen Fall, ist der Toleranzring gegen den Innenring federnd vorgespannt. Mit dieser Vorspannung werden abhängig vom Lagerungskonzept im Wesentlichen zwei Aufgaben erfüllt. Einmal wird mit der Vorspannung, wie beim vorher beschriebenen Vierpunkt-Lager, ein sicherer und spielfreier Sitz des Innenringes auf der Lenkwelle erzielt. Außerdem wird hauptsächlich bei Schrägkugellagern oder Dreipunkt-Lagern bzw. Lageranordnungen der Innenring mittels eines durch Federkraft beaufschlagten Toleranzringes gegen die zwischen dem Innenring und Außenring laufenden Rollkörper vorgespannt. Die Rollkörper sind damit eingespannt und das oder die Lager spielfrei gestellt.

Die Toleranzringe sind in den verschiedensten Werkstoffen, insbesondere aus Stahlblech oder aus Kunststoff ausgeführt. Kunststoff wird als Werkstoff für die Fertigung der Toleranzringe immer häufiger verwendet. Toleranzringe aus Kunststoff lassen sich in der Massenfertigung relativ kostengünstig herstellen. Ihr großer Vorteil liegt jedoch in ihrem Schwingungen dämpfenden Verhalten. Damit wird den steigenden Anforderungen an einen niedrigen Geräuschpegel und komfortables Verhalten der Lenkung im Fahrzeug genüge getan.

Toleranzringe aus Metall sind in der Regel relativ dünnwandig ausgeführte, hohlzylindrisch ausgebildete und an einem Ende mit einer Schräge versehene Elemente, die wenig oder keine dämpfenden Eigenschaften aufweisen. Außerdem sind sie in ihrer Herstellung vergleichsweise zumeist teuerer als aus Kunststoff hergestellte Toleranzringe. Aus diesen Gründen kamen in der jüngsten Vergangenheit zunehmend Toleranzringe aus Kunststoff zur Anwendung.

Toleranzringe sind für die oben erwähnte Beaufschlagung mit einer Federkraft entweder mit einem federnden Element ausgestattet oder werden direkt oder indirekt mittels eines separaten federnden Elementes beaufschlagt. Für einen sicheren Sitz auf der Lenkwelle stützen sich die Toleranzringe in eine oder zwei axiale Richtungen an der Lenkwelle ab. Dazu greifen sie entweder selbst mittels eines Sicherungselementes in die Lenkwelle ein oder Stützen sich an einem separat an der Lenkwelle angeordneten Sicherungselement ab. Bekannte Beispiele für Sicherungselemente sind Lenkwellenschultern- oder absätze und Zackenringe. Die Zackenringe verkrallen sich mittels zackenartig ausgebildeter Lappen, vereinfacht Zacken genannt, in der Oberfläche der Lenkwelle.

In WO 98/26189, insbesondere in Figur 8, ist ein Lenkungslager der gattungsbildenden Art beschrieben, das im Wesentlichen die vorher beschriebenen Merkmale aufweist. Das Lager, ausgeführt als Schrägkugellager, wirkt in einer Lenksäule zusammen mit einem weiteren Schrägkugellager. Die Schrägkugellager sind mittels Federkraft gegeneinander vorgespannt. Das betrachtete Schrägkugellager weist einen Außenring und einen Innenring aus Blech auf. Zwischen den Ringen sind Kugeln mittels der Federkraft eingespannt. Dem Innenring ist ein als Toleranzring aus Kunststoff ausgeführtes Zwischenelement zugeordnet. Das Zwischenelement oder der Toleranzring zentriert das Lager auf einer Lenkwelle und spannt den Innenring gegen die Kugeln vor. Für eine derartige Vorspannung schließt sich dem Toleranzring eine Wellfeder an. Wenn das Lenkungslager in der Lenksäule montiert ist, stützt sich die Feder an einem Zackenring ab, der sich seinerseits mit seinen Zacken in dem Material der Oberfläche der Lenkwelle verkrallt hat. Der Zackenring sichert den Innenring und damit das Lager zumindest in eine axiale Richtung unverschiebbar auf der Lenkwelle. Der Außenring, die Kugeln, häufig auch ein Käfig zum Führen der Kugeln, der Innenring, der Toleranzring, die Federn und auch der Zackenring sind zu einer Baueinheit zusammengefasst, in der die Teile zumindest verliersicher für die Handhabung des Lagers bis zu seiner Montage aneinander gesichert sind.

Ein Lager, wie das oben beschriebe nach dem Stand der Technik, weist also eine relativ große Anzahl an Teilen auf. Jedes der einzelnen Teile benötigt Werkzeuge für die Fertigung sowie auch für die Montage, benötigt Zeit für seine Fertigung und verursacht somit relativ hohe Kosten.

Ein weiteres Kosten verursachendes Teil kommt in der Regel zu derartigen Lagern hinzu, wenn diese als elektrische Verbindung zwischen einem am Fahrzeug befindlichen Gehäuse und der Lenkwelle vorgesehen sind. Diese Verbindung dient z. B. zum Leiten des Hupenstromes oder als Masseleiter. Dazu werden häufig Blechelemente aus Kupfer oder Messing bzw. ähnlichen Werkstoffen oder mit derartigen Werkstoffen beschichtete gesonderte Elemente als Verbindung zwischen dem Innenring und der Lenkwelle verwendet.

Die als elektrische Verbindung ausgebildeten Elemente liegen an dem Innenring und an der Lenkwelle an. Sie sind beispielsweise in einen Toleranzring aus Kunststoff integriert und überbrücken den aus isolationsfähigem Material gebildeten Kunststoff. Es ist eine leitfähige Brücke zwischen dem Innenring und der Lenkwelle hergestellt. Als eine derartige Verbindung könnten die anfangs erwähnten metallischen Toleranzringe eingesetzt werden. Hier ist jedoch zu berücksichtigen, dass diese relativ steifen Ringe kein Dämpfungsverhalten aufweisen. Sie werden deshalb nur ungern und mit Nachteilen verbunden verwendet. Bis zum Innenring gelangt der Stromfluss in der Regel über den metallischen Außenring und die teilweise in leitfähiges Fett gebetteten Stahlkugeln. Stromleitflähige Lager sind in der Regel mit der anfangs beschriebenen Methode vorgespannt, um einen sicheren Kontakt der einzelnen Elemente zu gewährleisten.

Der Kontakt ist bei Verwendung von metallischen Toleranzringen als auch bei dem Einsatz der Blechelemente zwischen den einzelnen Kontaktpartnern nur durch Anlage der Oberfläche der einzelnen Elemente gegeneinander hergestellt. Dieser Kontakt kann leicht durch zu lockere Anlage, durch Korrosion oder durch Schmutz unterbrochen sein. Derartige Verbindungen sind also ziemlich anfällig und weisen teilweise recht hohe Widerstände auf.

### Zusammenfassung der Erfindung

Aufgabe der Erfindung ist es daher, ein Lager zur Lagerung einer Lenksäule zu schaffen, bei dem der Aufwand für die Fertigung und Montage und damit die Kosten reduziert sind und bei dem gleichzeitig ohne großen Aufwand unter Vermeidung der aufgeführten Nachteile eine sichere elektrische Verbindung erzeugt ist.

Diese Aufgabe ist nach dem kennzeichnenden Teil des Anspruchs 1 dadurch gelöst, dass das Zwischenelement aus Blech gebildet sowie in dem Innenring integriert ist und dass das Zwischenelement zumindest teilweise den radialen Abstand überbrückende sowie auf die Oberfläche der Lenkwelle wirkende und das Lager in zumindest eine Richtung axial sichernde Lappen aufweist. Mit der Integration des Zwischenelementes und der axialen Lagesicherung des Innenringes und damit des Lagers über das Zwischenelement sind zumindest die Anzahl zu montierender Teile für ein Lager und die damit verbundenen Kosten reduziert.

Die Erfindung sieht vor, den radialen Abstand, der durch Summentoleranzen aber auch durch andere beliebig gewählte Abstände zwischen dem Lager und der Lenkwelle bestimmt sein kann, zumindest teilweise mit Lappen zu überbrücken. Die Lappen sind zumindest federnd soweit nachgiebig ausgelegt, dass sie einerseits mit genügend Vorspannung auf die Oberfläche wirken und damit das Lager axial sichern und andererseits die größtmöglichen Summentoleranzen ausgleichen. Es ist auch möglich die Lappen federnd auszulegen, so dass das Lager mittels des in den Innenring integrierten Zwischenelementes vorgespannt ist. Die Lappen sind in ihrer Geometrie vielfältig gestaltbar und in ihren Abmessungen allein oder unterstützt durch andere Sicherungselemente den vorgeschriebenen axialen Haltekräften, z. B. den Anforderungen unter Crash-Lasten und bei Mißbrauchslasten, angepasst. Die Lappen sind vorzugsweise in Umfangsrichtung nebeneinander in einer Reihe mit beliebig großer Anzahl angeordnet.

Die Zwischenelemente nach Erfindung sind für einen Sitz auf Lenkwellen mit rundem Querschnitt aber auch auf Lenkwellen mit beliebigen Querschnitten, z. B. Dreikant-, und Vierkantausführungen gestaltbar. Weiterhin ist die Gestaltung der Erfindung für Lager mit dem im Kapitel "Hintergrund der Erfindung" aufgeführten sowie weiteren Anwendungen, Funktionen und Eigenschaften anwendbar, von denen einzelne bevorzugte kurz aufgezählt werden:
- Schäg-, Dreipunkt-, Vierpunkt- und Pendelkugellager, Rollenlager
- vorgespannte Lager der vorgenannten Gattung, d. h. Lager bei denen die Rollkörper zwischen dem Innen- und Außenring eingespannt sind und damit spielfrei laufen. Die Lager sind dabei auch indirekt mittels beispielsweise eines "Servo-Effektes" in einer Anordnung von zwei gegeneinander vorgespannten Lagern vorgespannt. In einem derartigen Fall wirkt mindestens ein Federelement auf das andere Lager der Anordnung. Das Lager gemäß Erfindung ist dann durch die Wirkung des Federelementes am anderen Lager auf die Lageranordnung vorgespannt.
- die Lappen greifen in eine Nut oder anders gestaltete Vertiefungen in der Lenkwelle ein,
- die Lappen stützen sich an einer Lenkwellenschulter oder anders gestalteten Vorsprüngen ab,
- die Lappen liegen mit einer derartig hohen Vorspannung an der Lenkwelle an, dass eine Sicherung durch den Anpressdruck der Lappen erzielt wird und
- die Lappen stützen sich an unterstützend wirkenden Elementen wie Sicherungsringen und in die Oberfläche krallenden Zackenringen axial ab.

Das Zwischenelement ist aus Stahlblech gefertigt und kann als separat gefertigtes Teil in den Innenring, beispielsweise mittels eines Presssitzes, eingesetzt werden oder ist wie eine bevorzugte Ausgestaltung der Erfindung vorsieht, einstückig mit dem Innenring ausgebildet. Der Innenring weist dann mindestens einem Anlauf oder einer voll ausgebildeten Laufbahn für die Rollkörper auf. Eine voll ausgebildete Laufbahn ist in ihrem senkrecht zur Tangentialrichtung ausgerichteten Querschnitt betrachtet, vorzugsweise mit einer üblicherweise in derartigen Lagern ausgeführten Schmiegung versehen.

Mit einstückig geformten Innenringen gemäß Erfindung entfallen die Kosten für die Fertigung und Montage des Zwischenelementes und des Sicherungselementes.

Als Werkstoff für das Zwischenelement, welches die Form eines Zackenringes aufweisen kann, oder als Werkstoff für den einstückig mit dem Zwischenelement ausgebildeten Innenring ist vorzugsweise Federstahl, beispielsweise C75 und C55 vorgesehen. Es lassen sich aber auch jeder andere geeignete Werkstoff, insbesondere härtbare oder gehärtete Eisenwerkstoffe, für die Herstellung verwenden.

Eine bevorzugte Ausgestaltung der Erfindung sieht ein Lager mit wenigstens einem aus Blech gefertigten Außenring, mit Rollkörpern und mit einem Innenring aus Blech vor. Der Innenring ist dabei einstückig mit einer Laufbahn für die Kugeln, mit einem sich der Laufbahn anschließenden Bord sowie mit dem Zwischenelement ausgebildet. Das Zwischenelement weist zumindest eine Reihe in Umfangsrichtung benachbarter, vom Bord abgehender sowie sich wenigstens teilweise in die Lenkwelle krallender zackenartig ausgebildete Lappen auf. Die Ringe dieser Ausgestaltung eines Lagers gemäß Erfindung sind aus Blech, bevorzugt durch Umformen, gefertigt. Der Innenring umfasst wiederum das Zwischenelement und ist aus einer Rollenkörperlaufbahn, einem die Rollkörperlaufbahn mit den Lappen verbindenden Bord und den Lappen gebildet. Es ist vorzugsweise dünnwandiges Blech eingesetzt. Die Lappen sind zackenartig mit zumeist relativ scharfen rechtwinklig oder spitzwinklig ausgebildeten Kanten an freien zur Lenkwelle gewandten Enden versehen oder sind dort zugespitzt.

Der freie Abstand zwischen den einander gegenüberliegenden Enden der Lappen ist unter Beachtung aller Toleranzen um eine Differenz geringfügig kleiner als der kleinste Abstand zwischen den Auflagepunkten dieser Lappen an der Außenkontur der Lenkwelle. Diese Differenz bewegt sich vorzugsweise in einem Bereich von 0,02 bis 2,0 mm. Die Lappen sind radial senkrecht zur Längsachse der Lenkwelle nach innen gerichtet oder weichen radial nach innen gerichtet mit einer geringfügigen Schräglage von 1 bis 20° von der senkrechten Lage ab. Beim Aufschieben des Innenringes auf die Lenkwelle weichen die Lappen infolge des um die Differenz größeren Maße der Lenkwelle bzw. des um die Different größeren Abstandes an der Außenkontur der Lenkwelle teilweise elastisch aus. Sie graben sich dann in ihrer Endposition aufgrund ihrer scharfen Kanten und ihres in der Regel vergleichsweise zur Lenkwelle härteren Materiales leicht in das Material der Oberfläche der Lenkwelle ein. Der Innenring ist deshalb mit Hilfe der Lappen und aufgrund ihrer Vorspannung und Schrägstellung zumindest in eine axiale Richtung oder aber beide axiale Richtungen an der Lenkwelle verkrallt. Die vorgenannte Ausgestaltung ist bevorzugt auf ein indirekt vorgespanntes Schrägkugellager anwendbar.

Eine weitere Ausgestaltung des Hauptanspruches sieht ein Lager mit zwischen dem Innenring und dem Außenring eingespannten Rollkörpern und mit einer elektrischen Verbindung zwischen den Rollkörpern und der Lenkwelle vor, bei dem der Innenring die elektrische Verbindung ist. Der Einsatz von zusätzlichen Verbindungen für den Stromfluss entfällt mit einer derartigen Lösung gemäß Erfindung. Damit entfallen auch die Kosten für die Herstellung und Montage derartiger zusätzlicher Verbindungen. Die elektrische Verbindung wird zuverlässiger, da es weniger aneinanderliegende Kontaktpunkte und damit weniger Möglichkeit für unterbrochenen bzw. behinderten Stromfluss gibt.

Schließlich ist in einer weiteren Ausgestaltung dann auch die Anwendung eines einstückig mit dem Zwischenelement ausgebildeten Innenringes als elektrischen Verbindungselement vorgesehen. Die Lappen dieses Innenringes verkrallen sich wie schon erwähnt in der Oberfläche der Lenkwelle. Die Lappen sind vorzugsweise wie in der oben ausgeführten Ausgestaltung ausgeführt und angeordnet. Derartige in die Oberfläche der Lenkwelle verkrallte Lappen geben einen sicheren Kontakt für die elektrische Verbindung.

Für Lager gemäß Erfindung, das die Merkmale der vorher beschriebenen Ausgestaltung und zusätzlich einen die als Kugeln ausgebildeten Rollkörper führenden Käfig aufweist, ist außerdem vorgesehen, dass der Innenring mittels mindestens eines am Lager ausgebildeten Sicherungselementes unverlierbar an dem Lager gesichert ist. Der Käfig kann die Rollkörper wahlweise auch halten und/oder gleichzeitig mit den Sicherungselementen versehen sein. Die Sicherungselemente können auch am Außenring ausgebildet sein. Vom Käfig gehen vorzugsweise Schnappnasen oder ähnliche Elemente ab, die vom Käfig abgehende radial nach innen oder außen hervorstehende Vorsprünge bilden. Diese radial nach innen oder außen vorstehenden Vorsprünge hintergreifen den Innenring an einer seiner Kanten axial. Der Innenring ist im Lager für seinen Transport und seine Handhabung bis zur Montage verliergesichert. Im montierten Zustand auf der Lenkwelle sowie am funktionsbereiten Lager verlieren die Sicherungselemente ihre Wirkung. Am funktionsbereiten Lager gibt es in der Regel keine Berührung mehr zwischen den Sicherungselementen und dem Innenring.

Eine weitere Ausgestaltung der Erfindung sieht vor, dass das Sicherungselement durch vom Außenring abgehende radial nach innen hervorstehende Vorsprünge gebildet ist. Der Innenring wird vom Außenring radial zumindest teilweise außen umgriffen. Die Vorsprünge gehen ausgebildet als Prägungen, Ausstanzungen, Bördelungen oder Ähnliches von dem Außenring radial nach innen ab. Der durch die Vorsprünge begrenzte kleinste freie innere Durchmesser des Außenringes ist dabei kleiner als der größte Außendurchmesser des Innenringes. Der Innenring liegt während seiner Handhabung und während des Transportes lose zentriert im Außenring und wird mittels der Vorsprünge am Herausfallen gehindert. Am funktionsfähigen Lager gibt es ebenso wie bei vorhergehend beschriebener Variante in der Regel keinen Kontakt mehr zwischen den Vorsprüngen und dem Innenring.

Die letztgenannten Ausgestaltungen der Erfindung ermöglichen, dass das Lager bis zu seiner Montage in die Lenksäule oder das Fahrzeug als Baueinheit geliefert werden kann. Die umständliche Montage des relativ kleinen Innenringes bzw. sein Verlust während des Transportes werden verhindert. Die Kosten für die Gesamtmontage der Lenksäule bzw. der Lenkung können mit einer derartigen Ausgestaltung reduziert werden.

### Kurze Beschreibung der Zeichnungen

Die Erfindung wird nachfolgend anhand von Ausführungsbeispielen näher erläutert. Es zeigen
- Figur 1: ein Schrägkugellager ausgebildet gemäß Erfindung, bei dem der Innenring aus einem Anlauf für die Rollkörper und dem Zwischenelement gebildet ist,
- Figur 2: einen Innenring eines Lagers gemäß Erfindung mit zackenartig ausgebildeten Lappen,
- Figur 3: ein weiteres Ausführungsbeispiel eines erfindungsgemäßen Lagers, bei dem ein einstückig ausgebildeter Innenring eine Laufbahn für die Kugeln und das Zwischenelement aufweist,
- Figur 4: ein Ausführungsbeispiel mit einem einstückig aus Laufbahn und Zwischenelement gebildeten Innenring, wobei der Innenring von Sicherungselementen des Käfigs axial hintergriffen ist,
- Figur 5: eine alternative Variante zu dem Lager nach Figur 4, bei dem der Innenring durch Sicherungselemente axial hintergriffen ist, wobei die Sicherungselemente vom Außenring abgehen und
- Figur 6: einen Innenring eines Lagers gemäß Erfindung für eine Lenkwelle mit einem von der runden Querschnittsform abweichenden Querschnitt.

### Detaillierte Beschreibung der Zeichnungen

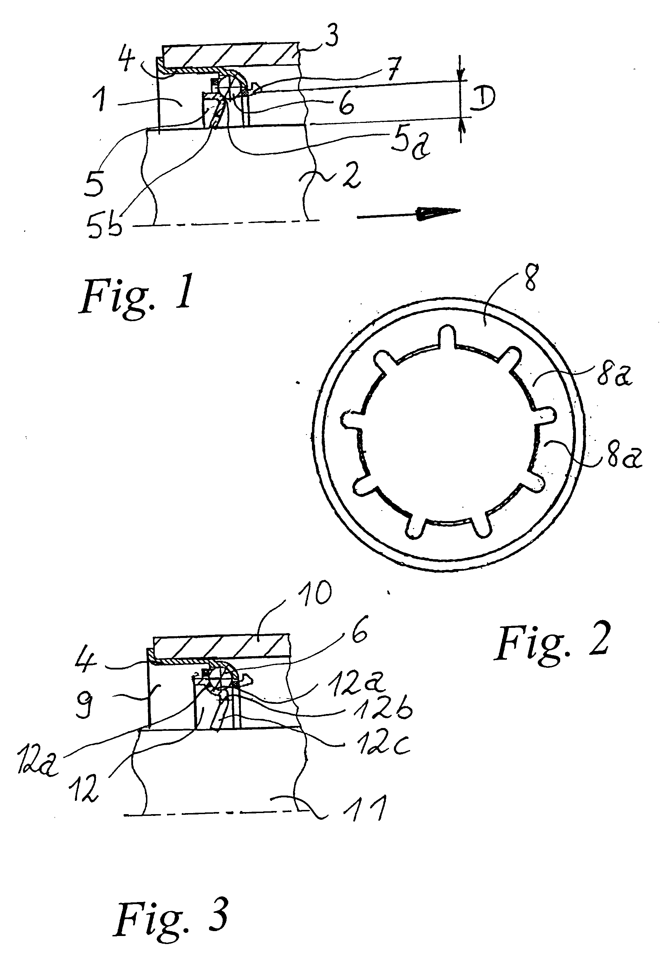

Figur 1 zeigt einen Schnitt durch eine Lenkwellenlagerung. Ein Lager 1 ist zur Lagerung einer Lenkwelle 2 in ein Gehäuse 3 eingepresst. Das Lager 1, vom Typ ein Schrägkugellager, besteht aus einem Außenring 4, einem Innenring 5 und zwischen dem Außenring 4 und dem Innenring 5 angeordneten Rollkörpern 6. Die Rollkörper 6 sind mit einem Käfig 7 geführt. Der Innenring 5 weist einen in Umfangsrichtung umlaufenden Anlauf 5a für die Rollkörper 6 sowie Lappen 5b auf. Die Lappen 5b überbrücken einen radialen Abstand D zwischen den Rollkörpern 6 und der Lenkwelle 2. Die Lappen 5b wirken auf die Oberfläche der Lenkwelle 2, indem sie sich in diese verkrallen. Die Lenkwelle 2 ist mittels der Lappen 5b zumindest in Pfeilrichtung axial unbeweglich am Lager 1 gesichert.

Figur 2 zeigt ein Ausführungsbeispiel eines Innenringes 8 zu einem nicht weiter dargestellten Lager gemäß Erfindung. Der Innenring 8 ist aus Blech gefertigt und weist in Umfangsrichtung zueinander benachbarte und radial schräg nach innen gehende Lappen 8a auf. Der Innenring 8 verkrallt sich mittels der Lappen 8a zumindest teilweise in die Oberfläche einer nicht dargestellten Lenkwelle.

Figur 3 zeigt ein weiteres Ausführungsbeispiel der Erfindung mit einem Lager 9. Das Lager 9 ist in einem Gehäuse 10 angeordnet und lagert eine Lenkwelle 11. Das Lager 9 ist im Wesentlichen ausgebildet wie das Lager 1 nach Figur 1, weist jedoch einen anders gestalteten Innenring 12 auf. Der Innenring 12 ist einstückig aus Blech mit einer Laufbahn 12a für die Rollkörper 6, mit einem sich der Laufbahn 12a anschließenden Bord 12b und Lappen 12c ausgebildet. Die Rollkörper 6, ausgebildet als Kugeln, sind zwischen dem Außenring 4 und dem Innenring 12 eingespannt. Der Innenring 12 weist an seiner Laufbahn 12a ebenso wie der Außenring 4 an seiner Laufbahn eine Schmiegung auf. Mittels der über die Schmiegung an dem Rollkörper 6 anliegenden Laufbahnen ist einerseits der für die Tragzahl des Lagers 9 notwendige Rollkörperkontakt und andererseits Kontakt für eine elektrische Verbindung geschaffen. So bildet dann auch der Innenring 12 eine elektrische Verbindung zwischen den Rollkörpern 6 und der Lenkwelle 11.

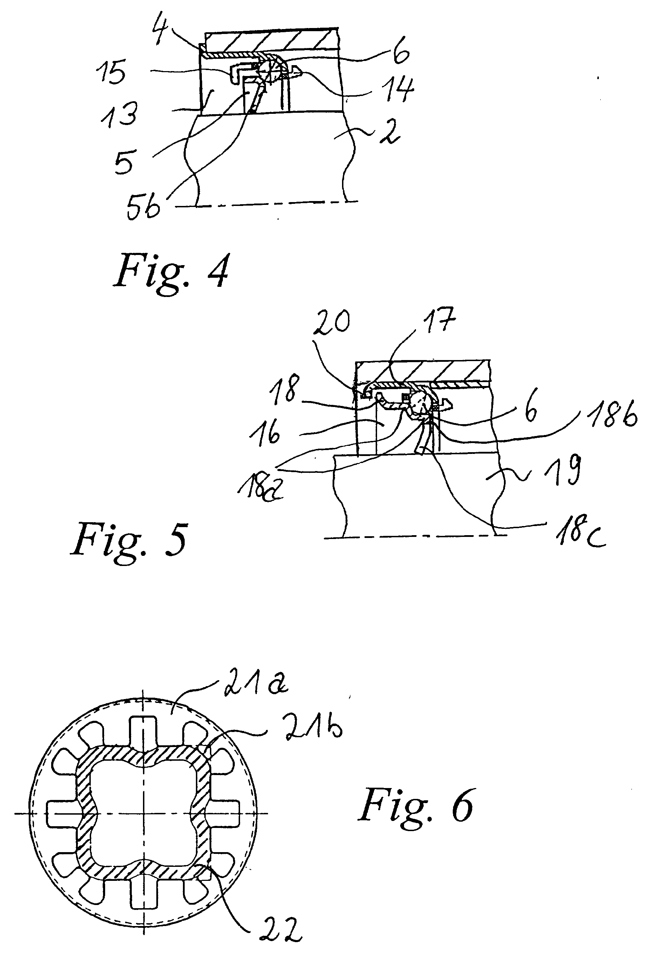

Figur 4 zeigt ein Lager 13, das den Außenring 4, die Rollkörper 6 und den Innenring 5 aufweist. Der Innenring 5, wie schon erwähnt, mit zackenartig angeordneten Lappen versehen, die in Umfangsrichtung zueinander benachbart in einer Reihe angeordnet sind und sich zumindest teilweise in die Lenkwelle 2 krallen. Das Lager 13 weist einen zu den bisher beschriebenen Varianten abweichenden Käfig 14 auf. Der Käfig 14 umgreift den Innenring 5 an seinem Außenumfang zumindest teilweise und hintergreift den Innenring 5 mit Sicherungselementen 15 axial. Die Sicherungselemente 15 sind vom Käfig abgehende radial nach innen vorstehende Vorsprünge.

Das Lager 16 in Figur 5 ist als ein Dreipunktlager ausgebildet. Es weist einen Außenring 17, die Rollkörper 6, den Käfig 7 und einen Innenring 18 auf. Der Innenring 18 bildet, wie im Beispiel zuvor, eine elektrische Verbindung zwischen den Rollkörpern 6 und einer Lenkwelle 19. Der Innenring 18 weist zwei Laufbahnen 18a, einen Bord 18b und vom Bord 18b abgehende zackenartig ausgebildete Lappen 18c auf. Die Lappen 18c sind in der Oberfläche der Lenkwelle 19 verkrallt. Der Innenring 18 steckt in dem Außenring 17, ist also von diesem umfangsseitig umgriffen. Der Außenring 17 hintergreift mit radial vorstehenden Vorsprüngen den Innenring 18 an einer seiner nach außen gerichteten Kanten. Die Vorsprünge bilden das Sicherungselement 20, mit dem der Innenring 18 während der Handhabung und des Transportes des Lagers 16 im Außenring 17 verliergesichert ist.

Figur 6 zeigt ein Ausführungsbeispiel eines Innenringes 21 zu einem nicht weiter dargestellten Lager gemäß Erfindung. Der Innenring 21 ist dem Querschnitt eine Lenkwelle 22 angepasst, deren Querschnitt von dem üblicherweise runden Querschnitt abweicht. Der Innenring 21 ist aus Blech gefertigt und weist in Umfangsrichtung zueinander benachbarte und radial schräg nach innen gehende Lappen 21a und 21b auf. Der Innenring 21 verkrallt sich mittels der Lappen 21a und 21b zumindest teilweise in die Oberfläche einer nicht dargestellten Lenkwelle.

### Bezugszeichen

- 1: Lager
- 2: Lenkwelle
- 3: Gehäuse
- 4: Außenring
- 5: Innenring
- 5a: Anlauf
- 5b: Lappen
- 6: Rollkörper
- 7: Käfig
- 8: Innenring
- 8a: Lappen
- 9: Lager
- 10: Gehäuse
- 11: Lenkwelle
- 12: Innenring
- 12a: Laufbahn
- 12b: Bord
- 12c: Lappen
- 13: Lager
- 14: Käfig
- 15: Sicherungselement
- 16: Lager
- 17: Außenring
- 18: Innenring
- 18a: Laufbahn
- 18b: Bord
- 18c: Lappen
- 19: Lenkwelle
- 20: Sicherungselement
- 21: Innenring
- 21a: Lappen
- 21b: Lappen
- 22: Lenkwelle

## Patentansprüche

1. Lager (1, 9, 13, 16) zur Lagerung einer Lenkwelle (2, 11, 19) mit wenigstens einem Außenring (4, 17), mit einem auf der Lenkwelle (2, 11, 19) angeordneten Innenring (5, 8, 12, 18) und mit zwischen dem Außenring (4, 17) und dem Innenring (5, 8, 12, 18) angeordneten Rollkörpern (6), wobei der Innenring (5, 8, 12, 18) sich zumindest mittels eines einen radialen Abstand zwischen der Lenkwelle (2, 11, 19) sowie dem Lager (1, 9, 13, 16) überbrückenden Zwischenelementes auf der Lenkwelle (2, 11, 19) abstützt und in zumindest eine axiale Richtung an der Lenkwelle (2, 11, 19) unbeweglich gesichert ist, **dadurch gekennzeichnet, dass** das Zwischenelement aus Blech gebildet sowie in den Innenring (5, 8, 12, 18) integriert ist und dass das Zwischenelement zumindest teilweise den radialen Abstand überbrückende sowie auf die Oberfläche der Lenkwelle (2, 11, 19) wirkende und die Lenkwelle (2, 11, 19) in zumindest eine Richtung axial sichernde Lappen (5b, 8a, 12c, 18c) aufweist.

2. Lager nach Anspruch 1, **dadurch gekennzeichnet, dass** der Innenring (5, 12, 18) einstückig aus Blech geformt zumindest aus einem Anlauf (5a) für die Rollkörper (6) und dem Zwischenelement gebildet ist.

3. Lager nach Anspruch 1 mit wenigstens einem aus Blech gefertigten Außenring (4), mit Rollenkörpern (6) und mit einem Innenring (12, 18) aus Blech, **dadurch gekennzeichnet, dass** der Innenring (8, 18) einstückig mit einer Laufbahn (12a, 18a) für die Rollenkörper (6), mit einem sich der Laufbahn anschließenden Bord (12b, 18b) sowie mit dem Zwischenelement ausgebildet ist und dass die Lappen (12c, 18c) vom Bord (12b, 18b) abgehend in Umfangsrichtung zueinander benachbart in zumindest einer Reihe angeordnet sowie zackenartig ausgebildet sind und sich wenigstens teilweise in die Lenkwelle (11, 19) krallen.

4. Lager nach Anspruch 1 mit zwischen dem Innenring (12, 18) und dem Außenring (4, 17) eingespannten Rollenkörper (6) und mit einer elektrischen Verbindung zwischen den Rollkörpern (6) und der Lenkwelle (11, 19), **dadurch gekennzeichnet, dass** der Innenring (12, 18) einstückig aus Blech mit zumindest einer Laufbahn für die Rollkörper (6), mit einem sich der Laufbahn anschließenden Bord (12b, 18b) und mit dem Zwischenelement ausgebildet ist, dass die Lappen (12c, 18c) vom Bord (12b, 18b) abgehend in Umfangsrichtung zueinander benachbart in zumindest einer Reihe angeordnet sowie zackenartig ausgebildet sind und sich wenigstens teilweise in die Lenkwelle (11, 19) krallen und dass der Innenring (12, 18) die elektrische Verbindung ist.

5. Lager nach Anspruch 1, mit wenigstens einem aus Blech gefertigten Außenring (4, 17), mit durch einen Käfig (7, 14) geführten Kugeln und mit einem Innenring (5, 18) aus Blech, **dadurch gekennzeichnet, dass** der Innenring (5, 18) einstückig mit dem Zwischenelement ausgebildet ist, dass die Lappen (5b, 18b) sich wenigstens teilweise in die Lenkwelle (2, 19) krallen und dass der Innenring (5, 18) mittels mindestens eines am Lager (13, 16) ausgebildeten Sicherungselementes (15, 19) unverlierbar an dem Lager (13, 16) gesichert ist.

6. Lager nach Anspruch 5, **dadurch gekennzeichnet, dass** das Sicherungselement (15) durch vom Käfig (7) abgehende radial hervorstehende Vorsprünge gebildet ist, wobei die Vorsprünge den Innenring (5, 18) axial zumindest teilweise hintergreifen.

7. Lager nach Anspruch 5, **dadurch gekennzeichnet, dass** der Innenring (18) radial außen zumindest teilweise vom Außenring (17) umgriffen ist und dass das Sicherungselement (19) durch vom Außenring (17) abgehende radial nach innen hervorstehende Vorsprünge gebildet ist.
